# EUROPÄISCHE PATENTSCHRIFT

(11) **EP 3 919 838 B1**
(45) Veröffentlichungstag und Bekanntmachung des Hinweises auf die Patenterteilung: **22.10.2025**
(21) Anmeldenummer: 21172293.9
(22) Anmeldetag: 05.05.2021
(51) Int. Cl.: F25B 41/20, F25B 41/37, F25B 49/02, F25B 41/35, F25B 41/385

(54) **HAUSHALTSGERÄT, INSBESONDERE WÄSCHETROCKNER, MIT EINER WÄRMEPUMPE UMFASSEND EINE EXPANSIONSEINRICHTUNG**
DOMESTIC APPLIANCE, IN PARTICULAR A CLOTHES DRIER, WITH A HEAT PUMP COMPRISING AN EXPANSION DEVICE
APPAREIL ÉLECTROMÉNAGER, EN PARTICULIER SÈCHE-LINGE, DOTÉ D'UNE POMPE À CHALEUR COMPRENANT UN DISPOSITIF D'EXTENSION

(30) Priorität: 02.06.2020 DE 102020206823
(43) Veröffentlichungstag der Anmeldung: 08.12.2021
(73) Patentinhaber: BSH Hausgeräte GmbH, 81739 München (DE)
(72) Erfinder: Eichstädt, Johannes, 14712 Rathenow (DE); Harbach, Alvaro, 10555 Berlin (DE); Stolze, Andreas, 14612 Falkensee (DE)

(56) Entgegenhaltungen:
- EP-A1- 3 425 109
- EP-A1- 3 495 548
- WO-A2-2011/072999
- CN-Y- 2 879 062
- US-A1- 2014 144 036
- US-A1- 2015 121 718
- US-A1- 2018 010 831

## Beschreibung

Die Erfindung betrifft ein Haushaltsgerät umfassend eine Wärmepumpe, die Wärmepumpe umfassend eine Wärmequelle zum Abgeben von Wärme, eine Wärmesenke zum Aufnehmen von Wärme und einen Arbeitsmittelkreislauf zum Pumpen von Wärme von der Wärmesenke zur Wärmequelle, welcher Arbeitsmittelkreislauf einen Kompressor, eine Expansionseinrichtung und ein in sich geschlossenes erstes Leitungssystem zum Zirkulieren eines Arbeitsmittels von dem Kompressor zur Wärmequelle, von der Wärmequelle zur Expansionseinrichtung, von der Expansionseinrichtung zur Wärmesenke und von der Wärmesenke zum Kompressor sowie eine Kontrolleinrichtung umfasst, und die Expansionseinrichtung ein durch die Kontrolleinrichtung steuerbares Ventil umfasst.

Das Dokument EP 2 513 368 B1 offenbart ein Haushaltsgerät, welches insbesondere als Wäschetrockner ausgebildet ist und welches eine Wärmepumpe mit einem Kompressor und einem Expansionssystem aufweist, in welcher der umgekehrte Rankine-Prozess zum Pumpen von Wärme von einer Wärmesenke zu einer Wärmequelle implementiert ist. Bei diesem Prozess wird ein in der Wärmepumpe zwischen der Wärmesenke und der Wärmequelle zirkulierendes Arbeitsmittel, welches gemäß in der Technologie geläufiger Praxis auch als "Kältemittel" bezeichnet wird, zyklisch wiederholt verdampft und kondensiert. Das Expansionssystem ist regelbar, indem verschiedene statische, also in sich unveränderbare, Expander, beispielsweise Kapillaren, mittels Schaltventilen zu verschiedenen Parallelschaltungen verbunden werden. Alternativ kann mittels eines schaltbaren Mehrwegventils ein statischer Expander aus einer vorgegebenen Vielzahl von Expandern zur Benutzung in der Wärmepumpe ausgewählt werden. Das Trocknen eines in dem Haushaltsgerät vorgelegten Trocknungsgutes erfolgt durch Prozessluft, welche das Trocknungsgut umströmt und in einem im Wesentlichen in sich geschlossenen Leitungssystem geführt wird. Dabei wird die Prozessluft durch die Wärmequelle der Wärmepumpe erwärmt, bevor sie zu dem Trocknungsgut gelangt, und durch die Wärmesenke der Wärmepumpe abgekühlt, nachdem sie von dem Trocknungsgut abgeströmt ist und sich dabei mit Feuchtigkeit beladen hat. Das Abkühlen führt dazu, dass diese als Wasserdampf mitgeführte Feuchte kondensiert und sich aus dem Prozessluftstrom abscheidet. Sie wird gesammelt, um nach Beendigung des Trocknungsprozesses entsorgt zu werden.

Das Dokument EP 2 640 885 B1 offenbart ein Haushaltsgerät, welches ebenfalls insbesondere als Wäschetrockner mit einer Wärmepumpe ausgestaltet ist. Die Wärmepumpe implementiert ebenfalls den umgekehrten Rankine-Prozess und weist einen Kompressor zum Komprimieren und Fördern des zirkulierenden Arbeitsmittels auf, der durch eine Kontrolleinrichtung des Haushaltsgeräts regelbar ist. Dadurch können wahlweise mehrere Trocknungsprozesse zum Trocknen eines vorgegebenen Trocknungsgutes, insbesondere feuchter Wäschestücke, realisiert werden. In dem Haushaltsgerät sind auch verschiedene Sensoren vorgesehen, welche zum Senden verschiedener Messwerte zur Kontrolleinrichtung während eines laufenden Trocknungsprozesses vorgesehen sind, und die Kontrolleinrichtung den Trocknungsprozess anhand dieser Messwerte steuert.

Das Dokument EP 2 732 090 B1 offenbart ebenfalls ein Haushaltsgerät, welches insbesondere als Wäschetrockner mit einer Wärmepumpe ausgestaltet ist. In diesem Wäschetrockner wird das zum Trocknen vorgelegte Trocknungsgut mittels eines Prozessluftstroms getrocknet, welcher in einem offenen Prozessluftkreislauf geführt wird. Durch ein Gebläse wird Prozessluft aus der Umgebung des Trockners angesaugt, durch die Wärmequelle der Wärmepumpe erwärmt und nach Passieren des Trocknungsgutes durch die Wärmesenke abgekühlt und entfeuchtet. Die Wärmepumpe enthält ebenfalls eine Expansionseinrichtung, welche variabel ist, indem verschiedene Kapillaren durch entsprechende Schaltventile in verschiedenen Konfigurationen zueinander parallel geschaltet werden. Das Dokument WO 2011/072999 A2 offenbart ein Haushaltsgerät gemäß dem Oberbegriff des Anspruchs 1.

Unter einem Haushaltsgerät wird vorliegend eine Einrichtung verstanden, die zur Nutzung beim Führen eines privaten Haushalts zur Bewirkung eines dabei angestrebten materiellen Erfolges geeignet und bestimmt ist.

Bei der Weiterentwicklung der Haushaltsgeräte mit Wärmepumpen auf der Grundlage des umgekehrten Rankine-Prozesses wird inzwischen auch erwogen, elektronisch steuerbare Expansionsventile in den Wärmepumpen einzusetzen. Dabei wird insbesondere eine Regelung eines Drucks, bei dem ein Arbeitsmittel verdampft, oder einer Überhitzungstemperatur, auf welche das verdampfte Kältemittel über die Verdampfungstemperatur, bei der das Verdampfen in der Wärmesenke erfolgt, hinaus in der Wärmesenke erwärmt wird, in Betracht gezogen. Solche Überhitzung des Arbeitsmittels, wenn auch nur geringfügig über die Verdampfungstemperatur hinaus, wird angestrebt mit dem Ziel der sicheren Vermeidung, dass nicht verdampftes Kältemittel in den Kompressor gelangt und dort durch explosionsartiges Verdampfen Störungen des Kompressors bis zu schweren Beschädigungen hervorrufen kann.

Wenn in einer mit einem elektronisch steuerbaren Expansionsventil zu versehenden Wärmepumpe ein brennbares Arbeitsmittel eingesetzt werden soll, ist unter Umständen eine Sicherheitsmaßnahme erforderlich, um in jedem Fall eines funktionellen Ausfall des elektronisch steuerbaren Expansionsventils, bei dem sich das Expansionsventil schließt, einen unkontrollierten Anstieg des Drucks im Arbeitsmittel durch den weiter arbeitenden Kompressor zu verhindern. Die DIN-Norm DIN EN 60335-2-11 verlangt in der Wärmepumpe eines Wäschetrockners, in welcher ein brennbares Kältemittel eingesetzt ist, die Einrichtung einer druckempfindlichen elektrischen Begrenzungseinrichtung neben einem elektronisch steuerbaren Expansionsventil. Daneben gilt gemäß dieser DIN-Norm eine Kapillare, wie sie als statischer Expander gewöhnlich eingesetzt wird, als sicher vor einem funktionellen Ausfall.

Der Einsatz eines brennbaren Arbeitsmittel in der Wärmepumpe eines Haushaltsgeräts, insbesondere eines Wäschetrockners, ist erstrebenswert sowohl aus Gründen des Umweltschutzes, nämlich weil ein solches Arbeitsmittel, welches durch Beschädigung der Wärmepumpe in die Umwelt entweicht, dort in kurzer Zeit abgebaut wird, und aus Gründen der Energieersparnis, weil Wärmepumpen mit solchen Arbeitsmittels sich als besonders effektiv erwiesen haben. Zum Einsatz kommt in solchen Fällen vor allem Propan, welches in der vorliegend relevanten Technologie auch als R290 bekannt ist. Daneben wird auch der Einsatz von Propen, auch als R1270 bekannt, und 1,1-Difluoräthan, auch als R152a bekannt, erwogen.

Der beim Einsatz eines brennbaren Arbeitsmittels und einem elektronisch steuerbaren Expansionsventil in einer Wärmepumpe eines Haushaltsgeräts erforderliche zusätzliche Einsatz einer druckempfindlichen elektrischen Begrenzungseinrichtung erfordert einen beträchtlichen Aufwand an zusätzlichen Kosten für Entwicklung und Herstellung eines solchen Haushaltsgeräts. Er kann die Wirtschaftlichkeit des Einsatzes eines elektronisch gesteuerten Expansionsventils daher trotz der damit verbundenen Vorteile in Frage stellen.

Es besteht daher ein Bedarf an einem gattungsgemäßen Haushaltsgerät, in dem eine Bereitstellung eines elektronisch steuerbaren Expansionsventils kostengünstig und wirkungsvoll ermöglicht ist. Damit ist es die Aufgabe der Erfindung, ein solcherart ertüchtigtes Haushaltsgerät bereitzustellen.

Zur Lösung dieser Aufgabe wird gemäß der Erfindung ein Haushaltsgerät mit eingangs und im Oberbegriff des entsprechenden unabhängigen Patentanspruchs aufgeführten Gattungsmerkmalen angegeben, welches zusätzlich die Merkmale des kennzeichnenden Teils des unabhängigen Patentanspruchs aufweist.

Bevorzugte Ausgestaltungen der Erfindung sind in den abhängigen Patentansprüchen sowie in nachfolgender Beschreibung aufgeführt und können auch in Kombinationen untereinander angewendet werden, soweit technische Erwägungen dies gestatten, auch soweit dies hierin nicht explizit ausgeführt ist.

Zur Lösung der Aufgabe wird gemäß der Erfindung dementsprechend angegeben ein Haushaltsgerät umfassend eine Wärmepumpe, die Wärmepumpe umfassend eine Wärmequelle zum Abgeben von Wärme, eine Wärmesenke zum Aufnehmen von Wärme und einen Arbeitsmittelkreislauf zum Pumpen von Wärme von der Wärmesenke zur Wärmequelle, welcher Arbeitsmittelkreislauf einen Kompressor, eine Expansionseinrichtung und ein in sich geschlossenes erstes Leitungssystem zum Zirkulieren eines Arbeitsmittels von dem Kompressor zur Wärmequelle, von der Wärmequelle zur Expansionseinrichtung, von der Expansionseinrichtung zur Wärmesenke und von der Wärmesenke zum Kompressor sowie eine Kontrolleinrichtung umfasst, und die Expansionseinrichtung ein durch die Kontrolleinrichtung steuerbares Ventil umfasst. In diesem Haushaltsgerät weist die Expansionseinrichtung einen statischen Expander auf, welcher dem steuerbaren Ventil parallel von dem Arbeitsmittel durchströmbar ist.

Erfindungsgemäß ist somit parallel zu dem steuerbaren Ventil ein statischer Expander vorgesehen. Damit steht auch dann, wenn sich das steuerbare Ventil aus irgendeinem Grunde schließt, ein Strömungsweg vom Kompressor über die Wärmequelle zur Wärmesenke und zurück zum Kompressor für das Arbeitsmittel offen. Weiteres Betreiben der Wärmepumpe ist damit auch bei geschlossenem steuerbarem Ventil möglich.

Ein Vorteil der Erfindung liegt darin, dass der gemäß DIN-Norm DIN EN 60335-2-11 als ausfallsicher geltende, kostengünstige und an sich einfach zu implementierende statische Expander genutzt wird, um die Expansionseinrichtung insgesamt als ausfallsicher zu qualifizieren. Damit wird der Einsatz eines brennbaren Arbeitsmittels in einer ein elektronisch steuerbares Expansionsventil aufweisenden Wärmepumpe eines Haushaltsgeräts mit geringem und kostengünstigem Aufwand erschlossen.

Grundsätzlich kann die Erfindung an einem Haushaltsgerät beliebigen Typs angewendet werden, zumal der zur Anwendung der Erfindung notwendige Aufwand recht gering ist. Insbesondere kommen als solches Haushaltsgerät ein Wäschetrockner und eine Spülmaschine, beide jeweils mit Wärmepumpe versehen, in Betracht.

In einer bevorzugten Ausführungsform der Erfindung ist der statische Expander eine Kapillare, wodurch der statische Expander besonders kostengünstig und im Rahmen der vorliegend betrachteten Technologie bestimmbar ist.

Gemäß der Erfindung weist das steuerbare Venti einen Durchlassquerschnitt auf, welcher zwischen Null und einem maximalen Durchlassquerschnitt kontinuierlich veränderbar ist. Mit weiterem Vorzug ist das steuerbare Ventil durch einen mit der Kontrolleinrichtung verbundenen Stellmotor steuerbar. Bei solcher Ausführung kommt der Vorteil, dass der statische Expander das Haushaltsgerät gemäß der Erfindung ausfallsicher macht, besonders zur Geltung.

In einer anderen bevorzugten Ausführungsform der Erfindung ist die Wärmepumpe eingerichtet zum zyklischen Verdampfen und Kondensieren des zirkulierenden Arbeitsmittels. Dies erschließt die Anwendung der Erfindung in einer Wärmepumpe, die den umgekehrten Rankine-Prozess implementiert.

In einer weiteren bevorzugten Ausführungsform der Erfindung ist das Arbeitsmittel eine brennbare Verbindung ausgewählt aus der Gruppe enthaltend Kohlenwasserstoffe und fluorierte Kohlenwasserstoffe. Noch weiter bevorzugt ist das Arbeitsmittel ausgewählt aus der Gruppe umfassend Propan oder R290, Propen oder R1270, und 1,1-Difluoräthan oder R152a.

In einer besonders bevorzugten Ausführungsform der Erfindung ist die Expansionseinrichtung eingerichtet, um beim Betreiben der Wärmepumpe eine Druckdifferenz im Arbeitsmittel, welches die Expansionseinrichtung durchströmt, innerhalb eines vorgegebenen Regelbereichs zu erzeugen, und ist der statische Expander eingerichtet, um eine Druckdifferenz im Arbeitsmittel zu erzeugen, welche zwischen 10 % und 30 % größer ist als eine Druckdifferenz innerhalb des Regelbereichs, wenn der statische Expander allein von dem Arbeitsmittel durchströmt wird. Auf diese Weise ist sichergestellt, dass die Wärmepumpe auch dann sicher betreibbar ist, wenn das steuerbare Ventil in der Expansionseinrichtung vollständig geschlossen ist.

In einer anderen besonders bevorzugten und mit der im vorigen Abschnitt erläuterten Ausführungsform vorteilhaft kombinierbaren Ausführungsform der Erfindung ist die Expansionseinrichtung eingerichtet, um beim Betreiben der Wärmepumpe eine Druckdifferenz im Arbeitsmittel, welches die Expansionseinrichtung durchströmt, innerhalb eines vorgegebenen Regelbereichs zu erzeugen, und ist der statische Expander eingerichtet, um eine Druckdifferenz im Arbeitsmittel zu erzeugen, welche einer maximalen Druckdifferenz innerhalb des Regelbereichs entspricht, wenn der statische Expander allein von dem Arbeitsmittel durchströmt wird. Auf diese Weise ist sichergestellt, dass die Wärmepumpe selbst dann, wenn das steuerbare Ventil vollständig geschlossen ist und bleibt, in einem für ihren bestimmungsgemäßen Betrieb vorgesehenen Zustand betrieben wird, womit eine vollständige Sicherheit gegen Ausfall des steuerbaren Ventils erreicht ist.

In noch einer bevorzugten Ausführungsform der Erfindung ist ein Sensor vorgesehen, welcher mit der Kontrolleinrichtung verbunden ist und welcher eingerichtet ist, um ein Signal an die Kontrolleinrichtung zu senden, und ist die Kontrolleinrichtung eingerichtet, um anhand des Signals das steuerbare Ventil gemäß einem vorgegebenen Programm zu steuern. Somit kann die Wärmepumpe durch das steuerbare Ventil in ihrem Betrieb geregelt werden.

In einer anderen bevorzugten Ausführungsform der Erfindung sind die Wärmequelle und die Wärmesenke Wärmetauscher, die jeweils zusätzlich von einem Prozessluftstrom durchströmbar sind, wobei der Prozessluftstrom von der Wärmequelle aufgeheizt und von und der Wärmesenke abgekühlt wird. Damit wird die Erfindung zur Anwendung zur Erwärmung und Abkühlung eines Prozessluftstroms in dem Haushaltsgerät erschlossen. Mit weiterem Vorzug ist die Wärmesenke eingerichtet um den Prozessluftstrom zusätzlich von mitgeführter Feuchtigkeit zu befreien. Dies ermöglicht die Anwendung der Erfindung für einen Trocknungsprozess. Mit zusätzlichem Vorzug ist der Prozessluftstrom in einem zweiten Leitungssystem geführt, welches ein Gebläse zum Antreiben des Prozessluftstroms und eine Trocknungskammer zum Aufnehmen von feuchtem Trocknungsgut mit der Wärmequelle und der Wärmesenke verbindet, wobei das Trocknungsgut zum Trocknen durch den Prozessluftstrom vorgesehen ist.

Das zweite Leitungssystem kann den Prozessluftstrom in einem im Wesentlichen geschlossenen, teilweise offenen oder ganz offenen Kreislauf führen. Im ersten Fall erfolgt kein oder nur ein unwesentlicher Austausch zwischen dem Prozessluftstrom und Luft im Inneren oder in der Umgebung des Haushaltsgeräts, wobei insbesondere der Druck im Prozessluftstrom im Wesentlichen, also bis auf wegen der Zirkulation des Prozessluftstroms notwendige Druckdifferenzen, dem Druck in der Umgebung des Haushaltsgeräts entspricht. Es ist aber auch möglich, den Prozessluftstrom in einem teilweise offenen Kreislauf zu führen, in welchem er nur teilweise zirkuliert, oder in einem offenen Kreislauf, bei dem der Prozessluftstrom das zweite Leitungssystem nur einmal passiert. Mit besonderem Vorzug ist das zweite Leitungssystem zum Führen des Prozessluftstroms in einem im Wesentlichen geschlossenen Kreislauf eingerichtet.

Das Haushaltsgerät gemäß der Erfindung oder einer ihrer bevorzugten Ausführungsformen ist vorzugsweise als Wäschetrockner ausgebildet, bei dem Wäschestücke als Trocknungsgut vorgesehen sind.

Alternativ kann das Haushaltsgerät gemäß der Erfindung oder einer ihrer bevorzugten Ausführungsformen auch als Spülmaschine ausgebildet sein, wobei dann Geschirr als Trocknungsgut vorgesehen ist.

Ausführungsbeispiele der Erfindung sind nachfolgend anhand der beigefügten Zeichnung näher erläutert. Es zeigen:
- Fig. 1: eine schematisierte frontale Ansicht eines vertikalen Schnitts eines ersten Haushaltsgeräts mit einer Wärmepumpe;
- Fig. 2: eine schematisierte frontale Ansicht eines vertikalen Schnitts eines zweiten Haushaltsgeräts mit einer Wärmepumpe;
- Fig. 3: eine schematisierte Ansicht eines vertikalen Schnitts eines oberen Teils eines als Wäschetrockner ausgebildeten Haushaltsgeräts gemäß Figur 1;
- Fig. 4: eine schematisierte Ansicht eines vertikalen Schnitts eines oberen Teils eines als Spülmaschine ausgebildeten Haushaltsgeräts gemäß Figur 1; und
- Fig. 5: eine schematisierte Ansicht eines steuerbaren Stellventils zum Einsatz im Haushaltsgerät gemäß Figur 1.

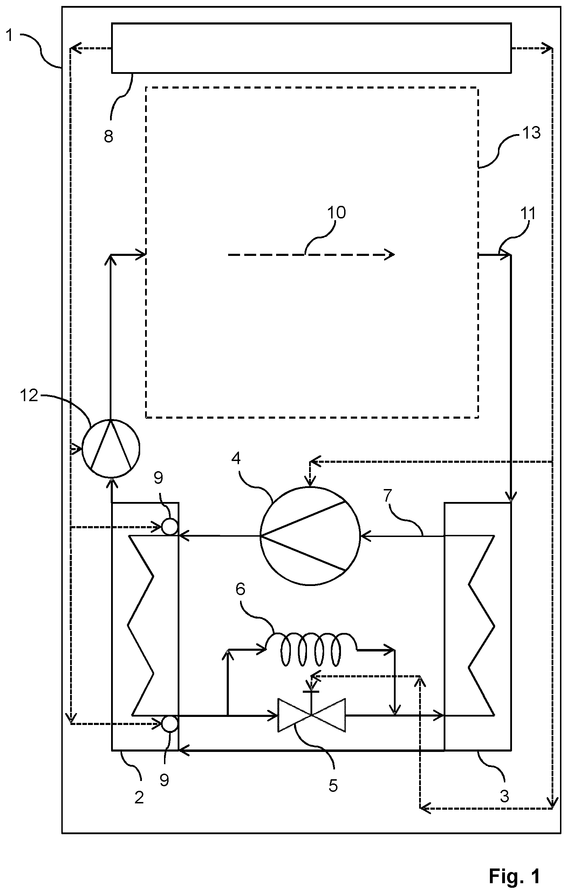

Figur 1 zeigt eine schematisierte erste Ausführungsform des erfindungsgemäßen Haushaltsgerätes 1. Dieses umfasst eine Wärmepumpe, welche eine Wärmequelle 2 zum Abgeben von Wärme unter Kondensation eines Arbeitsmittels, welches gasförmig zur Wärmequelle 3 gelangt, eine Wärmesenke 3 zum Aufnehmen von Wärme durch Verdampfen des Arbeitsmittels, welches flüssig oder als teils flüssiges, teils gasförmiges Phasengemisch zur Wärmesenke 2 gelangt, und einen Arbeitsmittelkreislauf 4, 5, 6, 7 zum Pumpen von Wärme von der Wärmesenke 3 zur Wärmequelle 2 mittels des zirkulierenden Arbeitsmittels umfasst. Der Arbeitsmittelkreislauf 4, 5, 6, 7 wiederum umfasst einen Kompressor 4 zum Komprimieren des Arbeitsmittels, welches gasförmig zum Kompressor 4 gelangt und diesen auch gasförmig wieder verlässt, eine Expansionseinrichtung 5, 6 zum Entspannen des Arbeitsmittels, wobei dieses bereits teilweise verdampfen kann, und ein in sich geschlossenes erstes Leitungssystem 7 zum Zirkulieren des Arbeitsmittels von dem Kompressor 4 zur Wärmequelle 2, von der Wärmequelle 2 zur Expansionseinrichtung 5, 6, von der Expansionseinrichtung 5, 6 zur Wärmesenke 3 und von der Wärmesenke 3 zum Kompressor 4.

Das Haushaltsgerät 1 umfasst außerdem eine Kontrolleinrichtung 8, die den Betrieb des Haushaltsgeräts vielfältig kontrolliert und auch Anzeige- und Eingabeeinrichtungen umfasst, durch welche ein Benutzer den an sich automatischen Betrieb des Haushaltsgeräts 1 kontrollieren und bestimmen kann.

Die Expansionseinrichtung 5, 6 umfasst ein durch die Kontrolleinrichtung 8 steuerbares Ventil 5, wobei eine entsprechende Verbindung zwischen beiden in Fig. 1 durch gestrichelte Pfeile angedeutet ist. Die Expansionseinrichtung 5, 6 weist zusätzlich einen statischen Expander 6 auf, welcher dem steuerbaren Ventil 5 parallel von dem Arbeitsmittel durchströmbar ist. Dieser statische Expander 6 ist eine Kapillare 6.

Durch die Kapillare 6 steht auch dann, wenn sich das steuerbare Ventil 5 aus irgendeinem Grunde schließt, ein Strömungsweg vom Kompressor 4 über die Wärmequelle 2 zur Wärmesenke 3 und zurück zum Kompressor 4 für das Arbeitsmittel offen. Weiteres Betreiben der Wärmepumpe ist damit und dadurch auch bei geschlossenem steuerbarem Ventil 5 möglich.

Ein Vorteil der Erfindung liegt darin, dass die gemäß DIN-Norm DIN EN 60335-2-11 als ausfallsicher geltende, kostengünstige und an sich einfach zu implementierende Kapillare 6 genutzt wird, um die Expansionseinrichtung 5, 6 insgesamt als ausfallsicher zu qualifizieren. Damit ist der Einsatz eines brennbaren Arbeitsmittels in der Wärmepumpe mit geringem und kostengünstigem Aufwand erschlossen.

Damit ist als Arbeitsmittel eine brennbare Verbindung aus der Gruppe enthaltend Kohlenwasserstoffe und fluorierte Kohlenwasserstoffe auswählbar, insbesondere aus der Gruppe umfassend Propan, auch bekannt als R290, Propen, auch bekannt als R1270, und 1,1-Difluoräthan, auch bekannt als R152a. Vorliegend kommt Propan als Arbeitsmittel zum Einsatz.

Die Expansionseinrichtung 5, 6 ist eingerichtet, um beim Betreiben der Wärmepumpe eine durch die Auslegung und Konstruktion der Wärmepumpe vorgegebene Druckdifferenz im Arbeitsmittel, welches die Expansionseinrichtung 5, 6 durchströmt, innerhalb eines vorgegebenen Regelbereichs zu erzeugen. Die Kapillare 6 ist dabei eingerichtet, um eine Druckdifferenz im Arbeitsmittel zu erzeugen, welche zwischen 10 % und 30 % größer ist als eine Druckdifferenz innerhalb des Regelbereichs, wenn die Kapillare 6 allein von dem Arbeitsmittel durchströmt wird. Außerdem ist die Kapillare 6 eingerichtet, um eine Druckdifferenz im Arbeitsmittel zu erzeugen, welche einer maximalen Druckdifferenz innerhalb des Regelbereichs entspricht, wenn die Kapillare 6 allein von dem Arbeitsmittel durchströmt wird. Auf diese Weise ist sichergestellt, dass die Wärmepumpe selbst dann, wenn das steuerbare Ventil 5 vollständig geschlossen ist und bleibt, in einem für ihren bestimmungsgemäßen Betrieb vorgesehenen Zustand betrieben wird, womit eine vollständige Sicherheit gegen Ausfall des steuerbaren Ventils 5 erreicht ist.

In dem Haushaltsgerät 1 ist weiterhin ein - in zwei Beispielen in Figur 1 erkennbarer - Sensor 9 vorgesehen, welcher gemäß der entsprechenden gestrichelten Pfeile in Fig. 1 mit der Kontrolleinrichtung 8 verbunden und eingerichtet ist, um ein Signal an die Kontrolleinrichtung 8 zu senden. Außerdem ist die Kontrolleinrichtung 8 eingerichtet, um anhand des Signals das steuerbare Ventil 5 gemäß einem vorgegebenen Programm zu steuern. Somit kann die Wärmepumpe durch das steuerbare Ventil 5 gemäß einem in der Kontrolleinrichtung 8 niedergelegten und verfügbaren Programm in ihrem Betrieb geregelt werden.

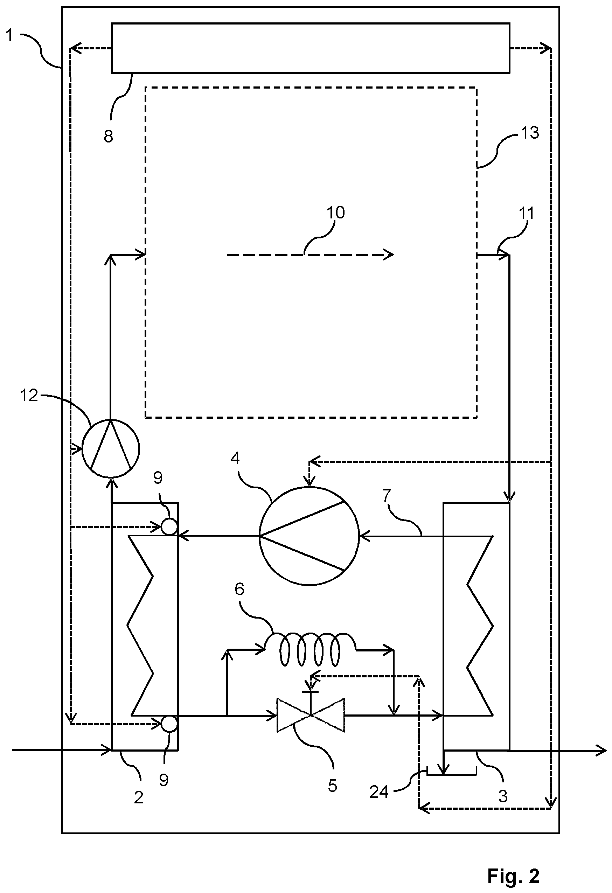

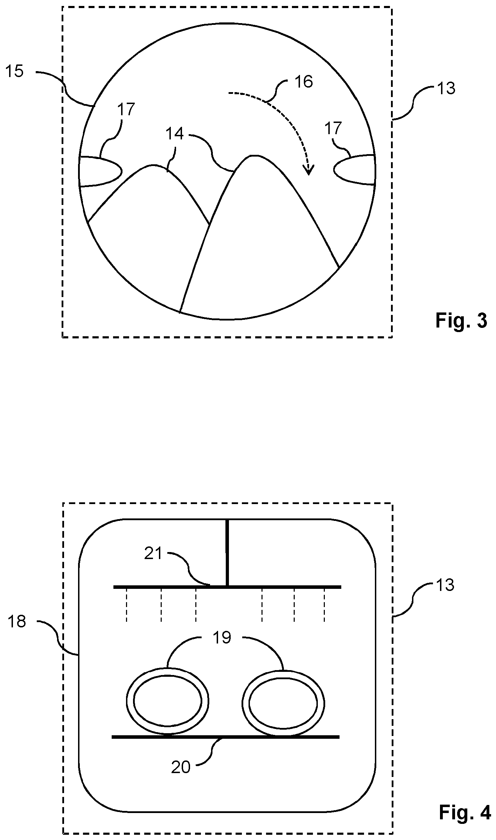

Die Wärmequelle 2 und die Wärmesenke 3 sind Wärmetauscher, die jeweils zusätzlich von einem Prozessluftstrom 10 durchströmbar sind, welcher in einem zweiten Leitungssystem 11 in einem im Wesentlichen geschlossenen Kreislauf geführt und dazu durch ein Gebläse 12 antreibbar ist. Das zweite Leitungssystem 11 verbindet das Gebläse 12 und eine Trocknungskammer 13, in welcher der Prozessluftstrom 10 durch einen Pfeil symbolisiert ist, zum Aufnehmen von feuchtem Trocknungsgut 14, 19 (siehe dazu Figuren 2 und 3) mit der Wärmequelle 2 und der Wärmesenke 3. Das Trocknungsgut 14, 19 ist zum Trocknen durch den Prozessluftstrom 10 vorgesehen. Der Prozessluftstrom 10 wird von der Wärmequelle 2 aufgeheizt und von und der Wärmesenke 3 abgekühlt, und in der Wärmesenke 3 zusätzlich von als Wasserdampf mitgeführter Feuchtigkeit befreit. Dieser Wasserdampf kondensiert in der Wärmesenke 3 und wird dort aus dem Prozessluftstrom 10 abgeschieden, wobei entsprechende Mittel, um diese kondensierte Feuchtigkeit aufzufangen und zur Entsorgung durch einen Benutzer zu sammeln, der Übersicht halber in Figur 1 nicht dargestellt sind.

Figur 2 zeigt eine schematisierte zweite Ausführungsform des erfindungsgemäßen Haushaltsgerätes 1, deren Aufbau dem Aufbau der ersten Ausführungsform weitgehend entspricht bis auf den Unterschied, dass das zweite Leitungssystem 11 zur Führung des Prozessluftstroms 10 im offenen Kreislauf eingerichtet ist. Dabei tritt der Prozessluftstrom 10 von außerhalb des Haushaltsgerätes 1 zunächst in die Wärmequelle 2 ein, wird dort erhitzt, durchläuft die Trocknungskammer 13 und gelangt schließlich zur Wärmesenke 3, in der er entfeuchtet wird und aus der er das Haushaltsgerät 1 wieder verlässt. Zum Sammeln des Kondensates, welches in der Wärmesenke 3 aus dem Prozessluftstrom auskondensiert und abgeschieden wird, ist ein Kondensatsammler 24 vorgesehen.

Figur 3 zeigt eine Trocknungskammer 13 in einem Haushaltsgerät 1 gemäß Figur 1 oder Figur 2, welches als Wäschetrockner ausgebildet ist. Bei diesem Haushaltsgerät 1 stellen Wäschestücke 14 das Trocknungsgut 14, 19 dar. Die Trocknungskammer 13 weist eine Trommel 15 auf, die in einer Drehrichtung 16 drehbar ist und Mitnehmer 17 aufweist, durch welche die Wäschestücke 14 beim Drehen der Trommel 15 hochgehoben und gegeneinander bewegt werden. Dies intensiviert den Kontakt des Prozessluftstroms 10 zu den Wäschestücken 14 und fördert deren Trocknung.

Bei einem Wäschetrockner wie in Fig. 3 dargestellt ist üblicherweise ein Flusenfilter zwischen der Trommel 15 und der Wärmesenke 3 vorgesehen, um kleinteilige Fasern und sonstige Partikel, die gewöhnlich als "Flusen" bezeichnet werden und die der Prozessluftstrom von den Wäschestücken 14 ablöst und wegführt, aufzufangen, damit sie sich nicht in der Wärmesenke 3 ablagern. Zusätzlich können Mittel vorgesehen sein, um die Wärmesenke 3 von dennoch abgelagerten Flusen zu befreien. Weiterhin sind üblicherweise Temperatur- und Feuchtigkeitssensoren in der Trommel 15 oder in dem zweiten Leitungssystem 11 vorgesehen, welche an die Kontrolleinrichtung 8 angeschlossen sind und dieser zum Steuern des Trocknungsprozesses Signale zuführen. Solche Komponenten sind der Übersicht halber in Fig.1, Fig. 2 und Fig. 3 nicht dargestellt.

Figur 4 zeigt als weiteres Ausführungsbeispiel die Trocknungskammer 13 eines Haushaltsgerätes 1, welches als Spülmaschine ausgebildet ist. Die Trocknungskammer 13 umfasst einen Spülraum 18, in welchem das Geschirr 19, symbolisiert durch zwei Teller, auf einer Ablage 20 angeordnet ist. Ein drehbarer Sprüharm 21 dient dem Verteilen von Spülflüssigkeit auf das Geschirr 19. Weitere Einrichtungen, die dem Aufbereiten, Verteilen und Ableiten der Spülflüssigkeit dienen, sind in Figur 3 nicht dargestellt, ebenso wenig allfällig gebräuchliche Sensoren, Filter und dergleichen.

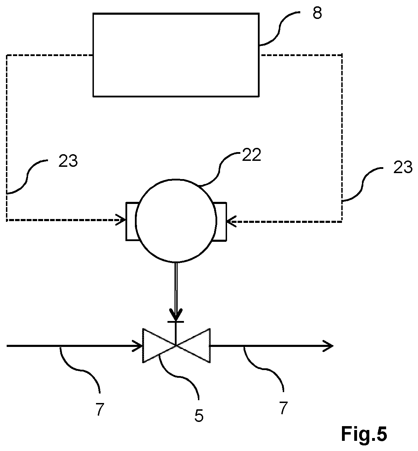

Figur 5 zeigt eine im Haushaltsgerät 1 gemäß Figur 1 oder Figur 2 einsetzbare Ausführungsform des steuerbaren Ventils 5 im ersten Leitungssystem 7, worin das Arbeitsmittel zirkuliert. Dieses weist einen Durchlassquerschnitt auf, welcher zwischen Null und einem maximalen Durchlassquerschnitt kontinuierlich veränderbar ist. Dabei ist das steuerbare Ventil 5 durch die Kontrolleinrichtung 8 über einen Stellmotor 22 steuerbar, welcher Stellmotor 22 mit der Kontrolleinrichtung 8 mittels elektrischer Leitungen 23 verbunden ist. Bei dieser Ausführung kommt der Vorteil, dass der statische Expander 6 das Haushaltsgerät 1 ausfallsicher macht, besonders zur Geltung.

Erfindungsgemäß ist parallel zu dem steuerbaren Ventil 5 ein statischer Expander 6 vorgesehen, womit auch dann, wenn sich das steuerbare Ventil 5 aus irgendeinem Grunde schließt, ein Strömungsweg vom Kompressor 4 über die Wärmequelle 3 zur Wärmesenke 2 und zurück zum Kompressor 4 für das Arbeitsmittel offenbleibt. Weiteres Betreiben der Wärmepumpe ist damit auch bei geschlossenem steuerbarem Ventil 5 möglich. Der gemäß DIN-Norm DIN EN 60335-2-11 als ausfallsicher geltende, kostengünstige und an sich einfach zu implementierende statische Expander 6 wird genutzt, um die Expansionseinrichtung 5, 6 insgesamt als ausfallsicher zu qualifizieren. Damit wird der Einsatz eines brennbaren Arbeitsmittels in einer ein elektronisch steuerbares Expansionsventil 5 aufweisenden Wärmepumpe eines Haushaltsgeräts 1 mit geringem und kostengünstigem Aufwand erschlossen.

### Bezugszeichenliste

- 1: Haushaltsgerät, Wäschetrockner
- 2: Wärmequelle
- 3: Wärmesenke
- 4: Arbeitsmittelkreislauf, Kompressor
- 5: Arbeitsmittelkreislauf, steuerbares Ventil
- 6: Arbeitsmittelkreislauf, statischer Expander, Kapillare
- 7: Arbeitsmittelkreislauf, erstes Leitungssystem
- 8: Kontrolleinrichtung
- 9: Sensor
- 10: Prozessluftstrom
- 11: Zweites Leitungssystem
- 12: Gebläse
- 13: Trocknungskammer
- 14: Trocknungsgut, Wäschestück
- 15: Trommel
- 16: Drehrichtung
- 17: Mitnehmer
- 18: Spülraum
- 19: Trocknungsgut, Geschirr
- 20: Ablage
- 21: Sprüharm
- 22: Stellmotor
- 23: Elektrische Leitung
- 24: Kondensatsammler

## Patentansprüche

1. Haushaltsgerät (1) umfassend eine Wärmepumpe, die Wärmepumpe umfassend eine Wärmequelle (2) zum Abgeben von Wärme, eine Wärmesenke (3) zum Aufnehmen von Wärme und einen Arbeitsmittelkreislauf (4, 5, 6, 7) zum Pumpen von Wärme von der Wärmesenke (3) zur Wärmequelle (2), welcher Arbeitsmittelkreislauf (4, 5, 6, 7) einen Kompressor (4), eine Expansionseinrichtung (5, 6) und ein in sich geschlossenes erstes Leitungssystem (7) zum Zirkulieren eines Arbeitsmittels von dem Kompressor (4) zur Wärmequelle (2), von der Wärmequelle (2) zur Expansionseinrichtung (5, 6), von der Expansionseinrichtung (5, 6) zur Wärmesenke (3) und von der Wärmesenke (3) zum Kompressor (4) sowie eine Kontrolleinrichtung (8) umfasst, und die Expansionseinrichtung (5, 6) ein durch die Kontrolleinrichtung (8) steuerbares Ventil (5) umfasst, und die Expansionseinrichtung (5, 6) einen statischen Expander (6) aufweist, welcher dem steuerbaren Ventil (5) parallel von dem Arbeitsmittel durchströmbar ist, **dadurch gekennzeichnet, dass** die Expansionseinrichtung (5, 6) eingerichtet ist, um beim Betreiben der Wärmepumpe eine über der Expansionseinrichtung (5, 6) vorliegende Druckdifferenz im Arbeitsmittel, welches die Expansionseinrichtung (5, 6) durchströmt, innerhalb eines vorgegebenen Regelbereichs zu erzeugen, und wobei der statische Expander (6) eingerichtet ist, um eine Druckdifferenz im Arbeitsmittel zu erzeugen, welche einer maximalen Druckdifferenz innerhalb des Regelbereichs entspricht, wenn der statische Expander (6) allein von dem Arbeitsmittel durchströmt wird,
wobei die Wärmequelle (2) und die Wärmesenke (3) Wärmetauscher sind, die jeweils zusätzlich von einem Prozessluftstrom (10) durchströmbar sind, wobei der Prozessluftstrom (10) von der Wärmequelle (2) aufgeheizt und von der Wärmesenke (3) abgekühlt wird,
wobei die Wärmesenke (3) eingerichtet ist, um den Prozessluftstrom (10) zusätzlich von mitgeführter Feuchtigkeit zu befreien.
wobei das Haushaltsgerät (1) ein zweites Leitungssystem (11), in dem der Prozessluftstrom (10) geführt wird, ein in dem zweiten Leitungssystem (11) angeordnetes Gebläse (12) zum Antreiben des Prozessluftstroms (10) und eine in dem zweiten Leitungssystem (11) angeordnete Trocknungskammer (13) zum Aufnehmen von feuchtem Trocknungsgut (14, 19) aufweist, wobei das zweite Leitungssystem (11) die Trocknungskammer (13) mit der Wärmequelle (2) und der Wärmesenke (3) verbindet, wobei das Trocknungsgut (14, 19) zum Trocknen durch den Prozessluftstrom (10) vorgesehen ist, das steuerbare Ventil (5) einen Durchlassquerschnitt aufweist,
**dadurch gekennzeichnet, dass**
welcher zwischen Null und einem maximalen Durchlassquerschnitt kontinuierlich veränderbar ist.

2. Haushaltsgerät (1) nach Anspruch 1, bei dem der statische Expander (6) eine Kapillare (6) ist.

3. Haushaltsgerät nach Anspruch 1 oder 2, welches einen mit der Kontrolleinrichtung (8) und dem steuerbaren Ventil (5) verbundenen Stellmotor (22) aufweist und bei dem das steuerbare Ventil (5) durch den Stellmotor (22) steuerbar ist.

4. Haushaltsgerät (1) nach einem der vorigen Ansprüche, bei dem die Wärmepumpe eingerichtet ist zum zyklischen Verdampfen und Kondensieren des zirkulierenden Arbeitsmittels.

5. Haushaltsgerät (1) nach einem der vorigen Ansprüche, bei dem das Arbeitsmittel eine brennbare Verbindung ausgewählt aus der Gruppe enthaltend Kohlenwasserstoffe und fluorierte Kohlenwasserstoffe ist.

6. Haushaltsgerät (1) nach Anspruch 5, bei dem das Arbeitsmittel ausgewählt ist aus der Gruppe umfassend Propan, Propen und 1,1-Difluoräthan.

7. Haushaltsgerät (1) nach einem der vorigen Ansprüche, bei dem ein Sensor (9) vorgesehen ist, welcher mit der Kontrolleinrichtung (8) verbunden ist und welcher eingerichtet ist, um ein Signal an die Kontrolleinrichtung (8) zu senden, und die Kontrolleinrichtung (8) eingerichtet ist, um anhand des Signals das steuerbare Ventil (5) gemäß einem vorgegebenen Programm zu steuern.

8. Haushaltsgerät (1) nach Ansprucheinem der vorigen Ansprüche, bei dem das zweite Leitungssystem (11) zum Führen des Prozessluftstroms (10) in einem im Wesentlichen geschlossenen Kreislauf eingerichtet ist.

9. Haushaltsgerät (1) nach einem der vorigen Ansprüche, welches als Wäschetrockner (1) ausgebildet ist, bei dem Wäschestücke (14) als Trocknungsgut (14, 19) vorgesehen sind.

## Claims

1. Household appliance (1) comprising a heat pump, the heat pump comprising a heat source (2) for outputting heat, a heat sink (3) for receiving heat and a working medium circuit (4, 5, 6, 7) for pumping heat from the heat sink (3) to the heat source (2), which working medium circuit (4, 5, 6 7) comprises a compressor (4), an expansion facilty (5, 6) and a per se closed first line system (7) for circulating a working medium from the compressor (4) to the heat source (2), from the heat source (2) to the expansion facility (5, 6), from the expansion facility (5, 6) to the heat sink (3) and from the heat sink (3) to the compressor (4) and comprises a control facility (8), and the expansion facility (5, 6) comprises a valve (5) which can be controlled by the control facility (8) and the expansion facility (5, 6) has a static expander (6), by which working medium can flow through the controllable valve (5) in parallel, **characterised in that** the expansion facility (5, 6) is designed to generate, during operation of the heat pump, a pressure difference in the working medium which exists above the expansion facility (5, 6), which working medium flows through the expansion facility (5, 6), within a predetermined control range, and wherein the static expander (6) is designed to generate a pressure difference in working medium, which corresponds to a maximum pressure difference within the control region, if the static expander (6) is flown through solely by the working medium,
wherein the heat source (2) and the heat sink (3) are heat exchangers, through which each can additionally be flown through by a process air flow (10), wherein the process air flow (10) is heated by the heat source (2) and cooled by the heat sink (3)
wherein the heat sink (3) is designed to additionally free the process air flow (10) from entrained moisture,
wherein the household appliance (1) has a second line system (1), in which the process air flow (10) is guided, a fan (12) arranged in the second line system (11) for driving the process air flow (10) and a drying chamber (13) arranged in the second line system (11) for receiving damp items to be dried (14, 19), wherein the second line system (11) connects the drying chamber (13) with the heat source (2) and the heat sink (3), wherein the items to be dried (14, 19) for drying purposes is provided through the process air flow (10), **characterised in that** the controllable valve (5) has an opening cross-section, which can be continuously changed between zero and a maximum opening cross-section.

2. Household appliance (1) according to claim 1, in which the static expander (6) is a capillary (6).

3. Household appliance according to claim 1 or 2, which has an actuator (22) connected to the control facilty (8) and the controllable valve (5) and in which the controllable valve (5) can be controlled by the actuator (22).

4. Household appliance (1) according to one of the preceding claims, in which the heat pump is designed to cyclically evaporate and condense the circulating working medium.

5. Household appliance (1) according to one of the preceding claims, in which the working medium is a flammable combination selected from the group containing hydrocarbon and fluorinated hydrocarbon.

6. Household appliance (1) according to claim 5, in which the working medium is selected from the group comprising propane, propene and 1,1 difluoroethene.

7. Household appliance (1) according to one of the preceding claims, in which a sensor (9) is provided, which is connected to the control facility (8) and which is designed to send a signal to the control facility (8) and the control facility (8) is designed to use the signal to control the controllable valve (5) according to a predetermined program.

8. Household appliance (1) according to one of the preceding claims, in which the second line system (11) is designed to guide the process air flow (10) in an essentially closed circuit.

9. Household appliance (1) according to one of the preceding claims, which is embodied as a tumble dryer (1) in which items of laundry (14) are provided as items to be dried (14, 19).

## Revendications

1. Appareil ménager (1) comprenant une pompe à chaleur, la pompe à chaleur comprenant une source de chaleur (2) pour dégager de la chaleur, un puits de chaleur (3) pour absorber de la chaleur et un circuit de fluide de travail (4, 5, 6, 7) pour pomper de la chaleur du puits de chaleur (3) à la source de chaleur (2), lequel circuit de fluide de travail (4, 5, 6, 7) comprend un compresseur (4), un dispositif d'expansion (5, 6) et un premier système de conduite fermé sur lui-même (7) pour la circulation d'un fluide de travail du compresseur (4) à la source de chaleur (2), de la source de chaleur (2) au dispositif d'expansion (5, 6), du dispositif d'expansion (5, 6) au puits de chaleur (3) et du puits de chaleur (3) au compresseur (4) ainsi qu'un dispositif de commande (8), et le dispositif d'expansion (5, 6) comprend une soupape (5) commandable par le dispositif de commande (8), et le dispositif d'expansion (5, 6) présente un expanseur statique (6), lequel peut être traversé par le fluide de travail parallèlement à la soupape commandable (5), **caractérisé en ce que** le dispositif d'expansion (5, 6) est agencé pour produire dans une plage de régulation prédéfinie, lors du fonctionnement de la pompe à chaleur, une différence de pression présente au-dessus du dispositif d'expansion (5, 6) dans le fluide de travail, lequel traverse le dispositif d'expansion (5, 6), et dans lequel l'expanseur statique (6) est agencé pour produire une différence de pression dans le fluide de travail, laquelle correspond à une différence de pression maximale dans la plage de régulation, lorsque l'expanseur statique (6) est traversé uniquement par le fluide de travail,
dans lequel la source de chaleur (2) et le puits de chaleur (3) sont des échangeurs de chaleur qui peuvent être en outre traversés respectivement par un flux d'air de processus (10), le flux d'air de processus (10) étant chauffé par la source de chaleur (2) et refroidi par le puits de chaleur (3),
dans lequel le puits de chaleur (3) est agencé pour libérer en outre le flux d'air de processus (10) de l'humidité apportée,
dans lequel l'appareil ménager (1) présente un deuxième système de conduite (11),
dans lequel est guidé le flux d'air de processus (10), un ventilateur (12) disposé dans le deuxième système de conduite (11) pour entraîner le flux d'air de processus (10) et une chambre de séchage (13) disposée dans le deuxième système de conduite (11) pour recueillir la matière à sécher humide (14, 19), dans lequel le deuxième système de conduite (11) relie la chambre de séchage (13) à la source de chaleur (2) et au puits de chaleur (3), dans lequel la matière à sécher (14, 19) est prévue pour sécher par le flux d'air de processus (10), **caractérisé en ce que** la soupape commandable (5) présente une section de passage qui est variable de manière continue entre zéro et une section de passage maximale.

2. Appareil ménager (1) selon la revendication 1, dans lequel l'expanseur statique (6) est un capillaire (6).

3. Appareil ménager selon la revendication 1 ou 2, lequel présente un moteur de positionnement (22) relié au dispositif de commande (8) et à la soupape commandable (5) et dans lequel la soupape commandable (5) peut être commandée par le moteur de positionnement (22).

4. Appareil ménager selon l'une des revendications précédentes, dans lequel la pompe à chaleur est agencée pour l'évaporation cyclique et la condensation du fluide de travail circulant.

5. Appareil ménager (1) selon l'une des revendications précédentes, dans lequel le fluide de travail est un composé inflammable choisi dans le groupe contenant des hydrocarbures et des hydrocarbures fluorés.

6. Appareil ménager (1) selon la revendication 5, dans lequel le fluide de travail est choisi dans le groupe comprenant du propane, du propène et du 1,1-difluoréthane.

7. Appareil ménager (1) selon l'une des revendications précédentes, dans lequel est prévu un capteur (9), lequel est relié au dispositif de commande (8) et lequel est agencé pour envoyer un signal au dispositif de commande (8), et le dispositif de commande (8) est agencé pour commander à l'aide du signal la soupape commandable (5) selon un programme prédéfini.

8. Appareil ménager (1) selon l'une des revendications précédentes, dans lequel le deuxième système de conduite (11) est agencé pour guider le flux d'air de processus (10) dans un circuit essentiellement fermé.

9. Appareil ménager (1) selon l'une des revendications précédentes, lequel est conçu comme sèche-linge (1), dans lequel les pièces de linge (14) sont prévues comme matière à sécher (14, 19).
